# EUROPEAN PATENT APPLICATION

(11) **EP 4 570 394 A1**
(43) Date of publication of application: **18.06.2025**
(21) Application number: 23307182.8
(22) Date of filing: 12.12.2023
(51) Int. Cl.: B08B 9/04, B21D 41/04

(54) **A PROCESSING METHOD TO PROCESS AT LEAST AN END OF A LINE OR OF A LINE SECTION, RELATED DECOMMISSIONING METHOD AND ASSEMBLY**

(71) Applicant: TechnipFMC Subsea France, 92400 Courbevoie (FR)
(72) Inventor: MORAND, Henri, WEST PERTH, 6005 (AU)
(74) Representative: Lavoix

(57) **Abstract**

The method comprises:
- placing the line or line section (12) along a longitudinal axis (A-A') on a supporting surface (91), the line or line section (12) having at least a tubular layer (16) defining an inner passage (14) at least partially closed by a pinched end at an end of the tubular layer (16);
- engaging the pinched end with a radial force application equipment configured to apply radial forces on or in the pinched end;
- activating the radial force application equipment to apply radial forces on or in the pinched end, the radial forces permanently deforming the pinched end to at least partially open the inner passage (14).

## Description

The present invention concerns a processing method to process at least an end of a line or of a line section, in particular a submarine line or line section or an onshore line or line section.

This method is in particular implemented in a decommissioning facility, configured to process line sections recovered from onshore or offshore sites, for example to recycle the metal and/or plastics contained in the line sections.

The decommissioning of fluid production sites after the termination of fluid production is currently a challenge for operators.

For example, an offshore production or/and injection site generally comprises fluid collection equipment located at the bottom of a body of water. Numerous fluid injection and/or production lines extend from the fluid collection equipment to the surface to transport fluids to be injected in the ground below the bottom of the body of water and/or to collect fluids produced from the ground.

In some instances, fluid production is carried out in shallow or mid-shallow waters with lengths of the fluid lines being less than 600 m. In some cases, the production is carried out in deep waters, in which the fluid lines have a more significant length.

Given the number of lines required to inject or/and produce fluids in several wells, the decommissioning of the production site generally requires recovering very significant lengths of submarine lines, in particular flexible lines such as flexible pipes.

The submarine lines are retrieved using vessels, onto which these lines may be cut into short sections. The submarine line sections generally have a length ranging from 6 m to 20 m.

Alternatively, the retrieved submarine lines are stored onto reels or carousels installed on the deck of the vessel. The submarine lines can then be cut offshore on the vessel or onshore at the deconstruction site.

Recycling the materials of the line or line sections recovered from fluid production sites has a strong interest to generate revenue, in particular from the recovered metals. It is also beneficial for the environment, as the amount of non-reusable waste is minimized.

The recovered line or line sections for example comprise lines which have been used to carry fluids for long periods of times, such as production pipes. A production pipe generally conveys not only production fluids such as oil and gas, but also materials from the reservoirs in which the production fluids are extracted.

Consequently, as time elapses, materials such as scales, deposits, sand or sludge accumulate on the inner walls of the production line. These accumulated materials may contain trace amounts of naturally occurring radioactive material (or "NORM"), such as uranium, thorium, and decay products. These radionuclides can be in a gaseous phase such as radon or can be water soluble such as the isotopes of radium.

It could thus be highly interesting or very often necessary to clean the inner passage of the line or line sections before they are fully deconstructed to be recycled, in particular to recover and process solid materials accumulated on the inner wall of the line or line sections.

The cleaning is generally carried out by inserting a water dispensing and projecting hose in the inner passage of the line or line section. However, it may sometimes be difficult, if not impossible to access the inner passage due to the cutting of the line into line sections when decommissioned.

Indeed, the line are often cut offshore, directly on the seabed or alternatively on the recovery vessel, using at least one shear cutter at determined locations to obtain line section with predetermined length. The at least one shear cutter not only cuts the line into line sections, but also compresses and deforms in the plastic domain the tubular layers of metal and/or polymer of the line sections at each end of the line section. In some instances, the ends of each tubular line section may be pinched or closed (partially or fully), and an access to the inner passage is therefore prevented.

A traditional method to overcome this difficulty is to cut anew the ends of each line section. The cut can be carried out offshore on the vessel, but due to bulk issue, the operation is preferably performed in an onshore decommissioning facility, using for example a saw.

This technique is not entirely satisfactory. First, the cutting of the line section end(s) by a saw is time consuming and can lead to projections of materials including potentially contaminants or radioactive materials which can be hazardous. Productivity is low and precautions must be taken to deal with these projected materials with respect to safety regulations.

Moreover, the cut of each pinched or closed sections must be carried out at least a dozen centimeters away from the end of the line section, such that an access opening can be reopened in the line section.

After being cut, the cut regions must be discarded, which creates waste that cannot be recycled or that has to be processed differently. When a large number of line sections have to be processed, this would generate a significant amount of waste.

One aim of the invention is thus to obtain a processing method to efficiently process a line or line section having at least a pinched or closed end, without creating additional waste and/or projection of residues.

To this aim, the subject matter of the invention is a processing method of the above-mentioned type, comprising :
- placing the line or line section along a longitudinal axis on a supporting surface, the line or line section having at least a tubular layer defining an inner passage at least partially closed by a pinched end at an end of the tubular layer;
- engaging the pinched end with a radial force application equipment configured to apply radial forces on or in the pinched end;
- activating the radial force application equipment to apply radial forces on or in the pinched end, the radial forces permanently deforming the pinched end to at least partially open the inner passage.

The term "at least partially closed" generally means that the inner passage at the end of the line or line section has a surface area, taken in projection in a plane perpendicular to a local longitudinal axis at the end of the line or line section, smaller, in particular at least 50% smaller that the maximal surface area that the inner passage could have, in particular if the inner passage had a circular contour.

The term "at least partially open" is meant relatively to the "at least partially closed inner passage". In particular, after the inner passage is "at least partially open", the surface area of the inner passage at the end of the line or line section, taken in projection in a plane perpendicular to a local longitudinal axis at the end of the line or line section, is larger, in particular at least 10% larger, than the surface area of the inner passage at the end of the line or line section when the inner passage is "at least partially closed".

The processing method according to the invention may comprise one or more of the following feature(s), taken solely, or according to any technical feasible combination:
- engaging the pinched end with a radial force application equipment comprises placing the pinched end between a first surface and a second surface of the radial force application equipment, activating the radial force application equipment comprising moving the first surface and the second surface closer to one another along a pressing axis to apply radial forces on the pinched end to press the pinched end, or
   wherein engaging the pinched end with a radial force application equipment comprises inserting a first surface and a second surface of the radial force application equipment in the inner passage at the pinched end, activating the radial force application equipment comprising moving the first surface and the second surface away from one another to apply radial forces in the pinched end to decompress the pinched end ;
- the pinched end comprises two adjacent end segments extending substantially along a pinch axis in projection in a plane perpendicular to the longitudinal axis, and, when moving the first surface and the second surface closer to one another, the pressing axis and the pinch axis define an angle comprised between 0° and 20°, preferably between 0° and 10°, in projection in the plane perpendicular to the longitudinal axis ;
- it comprises, after placing the line or line section on the supporting surface and before activating the radial force application equipment, rotating the pinched end about the longitudinal axis ;
- the pinched end is delimited by an end edge of the tubular layer;
- the line or line section comprises an additional pinched end at another end of the tubular layer, the method comprising engaging the additional pinched end with an additional radial force application equipment, and activating the additional radial force application equipment to apply radial forces on or in the additional pinched end, the radial forces permanently deforming the additional pinched end to at least partially open the inner passage ;
- activating the additional radial force application equipment to apply radial forces on or in the additional pinched end, is carried out simultaneously or subsequently to activating the radial force application equipment to apply radial forces on or in the pinched end ;
- placing the line or line section on the supporting surface comprises transversely moving the line or line section towards the supporting surface ;
- transversely moving the line or line section towards the supporting surface comprises laying the line or line section at a first end of at least a conveyor, the or each conveyor moving the line or line section to the supporting surface, or
   transversely moving the line or line section towards the supporting surface comprises laying the line or line section on an inclined surface relative to the supporting surface, the line or line section sliding towards the supporting surface by gravity ;
- the line or line section comprises a least one tubular layer, in particular a plurality of concentric tubular layers, defining the pinched end, activating the radial force application equipment comprising deforming the at least one tubular layer to open the inner passage ;
- the line or line section is a flexible pipe, in particular an unbonded or bonded flexible pipe or is a rigid pipe, in particular a single metal rigid pipe or a metal rigid pipe-in-pipe ;
- the tubular layer comprises at least a continuous layer made of metal and/or polymer;
- the line is a submarine line, in particular a flexible pipe, a composite pipe and/or a rigid pipe ;
- the line is a flexible pipe comprising advantageously an inner carcass, an inner pressure sheath, advantageously a pressure armor, at least a tensile armor layer positioned around the inner pressure sheath, and advantageously an outer protection sheath.

The invention also concerns a decommissioning method comprising :
- processing at least an end of a line or line end section using the processing method as defined above ;
- inserting at least a tool through the inner passage to carry out an operation in the inner passage, the tool being advantageously a cleaning hose to clean the inner passage or/and an inspection tool to inspect the inner passage.

The decommissioning method according to the invention may comprise one or more of the following feature(s), taken solely, or according to any technical feasible combination:
- it comprises, before processing at least an end of the line or line end section, recovering a submarine line offshore, and dividing at least an upper region of the recovered submarine line into line sections, the dividing comprising cutting an end of the line section by pinching at least an end of a tubular layer of the line section.

The invention also concerns an assembly comprising a processing unit to process at least an end of a line section, and a line section having at least a tubular layer defining an inner passage at least partially closed by a pinched end at an end of the tubular layer, the processing unit comprising :
- a supporting surface to place the line section along a longitudinal axis ;
- a radial force application equipment configured to apply radial forces on or in the pinched end supported along the longitudinal axis ;
the radial force application equipment being configured to apply radial forces on or in the pinched end, the radial forces being configured to permanently deform the pinched end to at least partially open the inner passage.

The assembly according to the invention may comprise one or more of following feature(s), taken solely, or according to any technical feasible combination:
- the radial force application equipment has a first surface and a second surface configured to receive the pinched end between them, and an actuator being configured to move the first surface and the second surface closer to one another along a pressing axis to apply radial forces on the pinched end to press the pinched end, or
the radial force application equipment comprises a first surface and a second surface configured to be inserted in the inner passage at the pinched end and an actuator being configured to move the first surface and the second surface away from one another to apply radial forces in the pinched end to decompress the pinched end;
- the assembly comprises a rotation mechanism, placed on the supporting surface, configured to rotate the line section, to control an angle of a pinch axis defined by two adjacent end segments of the pinched end in projection in a plane perpendicular to the longitudinal axis, relatively to the pressing axis of the press in projection in the plane perpendicular to the longitudinal axis ;
- the first surface is fixed with regards to the supporting surface or is delimited on the supporting surface, the radial force application equipment having a mandrel having a longitudinal notch delimiting the second surface, the notch preferably having a U shape or a V shape.

The invention will be better understood, based on the following description, given solely as an example, and made in reference to the appended drawings, in which:
- Figure 1 is a schematic upper view of a recovery vessel comprising a deck shear, to create submarine line sections from a recovered submarine line, the submarine line sections having pinched or closed regions at least at one of their ends;
- Figure 2 is a schematic upper view of a first processing unit according to the invention, in which at least a pinched end of a line section is processed;
- Figure 3 is an end elevation view of the processing unit of figure 2, in which a pinched end of the line section has been loaded into a press to be reopened;
- Figure 4 is a view similar to figure 3, after the press has been actuated to reopen an access to the inner passage of the line section;

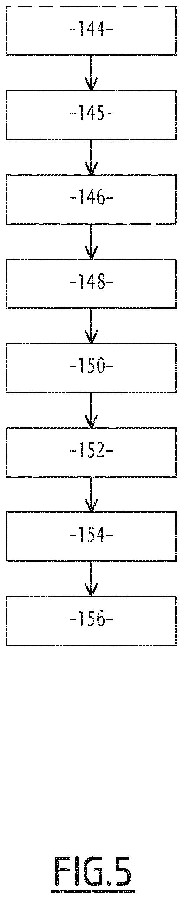

- Figure 5 is a flowchart of a decommissioning method according to the invention.

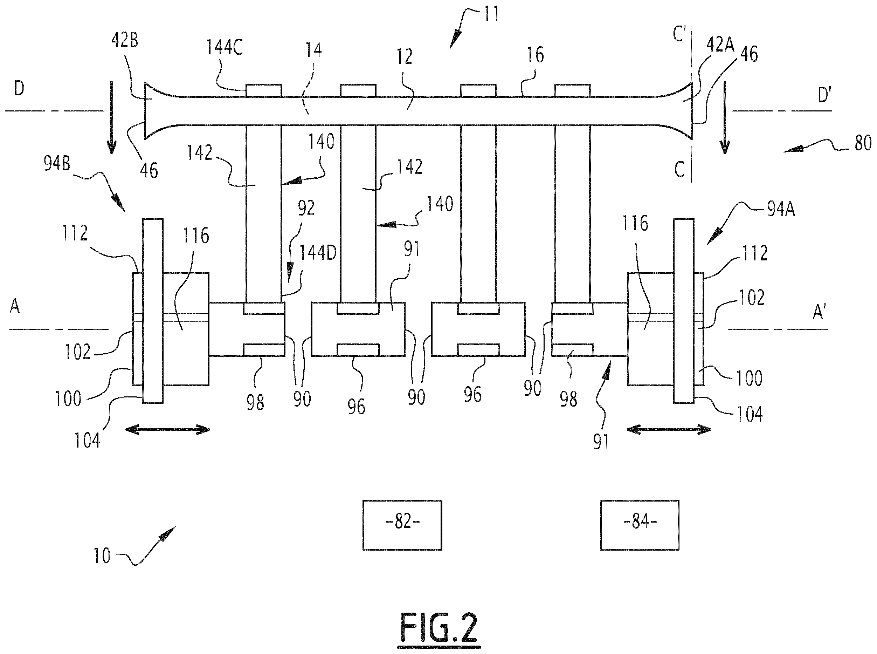

A first onshore decommissioning facility 10 according to the invention, comprising a processing unit 11 to process at least an end of a line or of line sections 12, is schematically depicted in figure 2.

In the example below, the processing of at least an end of a line section 12 obtained from dividing a line 19 into several line sections 12 will be described as an example. The same processing could be used to process an end of a line 19 which has not been divided.

Similarly, the processing of two ends of a line section 12 is also described as an example, although only one end of the line section 12 could be processed or may need to be processed.

The onshore decommissioning facility 10 is also configured to receive successive line sections 12 to possibly clean and deconstruct the line sections 12 and allow the recycling of the metal and polymer materials obtained from the line sections 12 after their end(s) have been processed.

The lines sections 12 are for example onshore line sections or submarine line sections.

In an example, the line sections 12 are sections of flexible pipe, in particular built according with the standards API 17J (Specification for Unbonded Flexible Pipe, 4th edition - May 2014) and API RP 17B (Recommended Practice for Flexible Pipe, 5th edition - March 2014) established by the American Petroleum Institute. The flexible pipe is advantageously an unbonded pipe. At least two adjacent layers of the flexible pipe are free to move longitudinally with respect to each other during flexure of the flexible pipe.

Alternatively, the line is a Hybrid Flexible Pipe (HFP), in particular built according with the standard DNV-ST-F1 19 (Thermoplastic Composite Pipes, Edition September 2019) established by the DNV (Det Norske Veritas) and previous API standards i.e. API 17J and API RP 17B. The hybrid flexible pipe is advantageously an unbonded flexible pipe. At least two adjacent layers of the hybrid flexible pipe are free to move longitudinally with respect to each other during flexure of the pipe.

Alternatively, the line is another type of flexible pipe, such as a bonded flexible pipe. The bonded flexible pipe is designed, manufactured and used according with the standards API RP 17B (Recommended Practice for Flexible Pipe, 5th edition - March 2014), API 7K (Drilling and Well Servicing Equipment, 6th edition - December 2015), API 16C (Choke and Kill Equipment, 3rd edition - March 2021) and API 17K (Specification for Bonded Flexible Pipe, 3rd edition - August 2017) established by the American Petroleum Institute.

Again alternatively, the line is a an umbilical, as defined in ISO 13628-5 "Petroleum and natural gas industries - Design and operation of subsea production systems - Part 5: Subsea umbilicals" published in December 2009 by the International Organization for Standardization, API 17E "Specification for Subsea Umbilicals", 5th Edition - July 2017, established by the American Petroleum Institute, and IEC60183:2015, January 2015, IEC60840:2020, May 2020 and/or IEC63026:2019, December 2019 , established by the International Electrotechnical Commission (IEC), all provide standards for the design and manufacture of umbilicals and power cables. Umbilical includes for example steel/thermoplastic/composite tube electrohydraulic umbilical, and Integrated Service/Production Umbilical (ISU^{™} / IPU^{™}).

Alternatively, again, the line is a single rigid metallic pipe including for example mechanically lined pipe (MLP) or polymer lined pipe (PLP), or is a rigid metallic pipe-in-pipe (PiP), as defined in the offshore standard DNV-ST-F101 "Submarine Pipeline Systems", August 2021, established by the DNV (Det Norske Veritas).

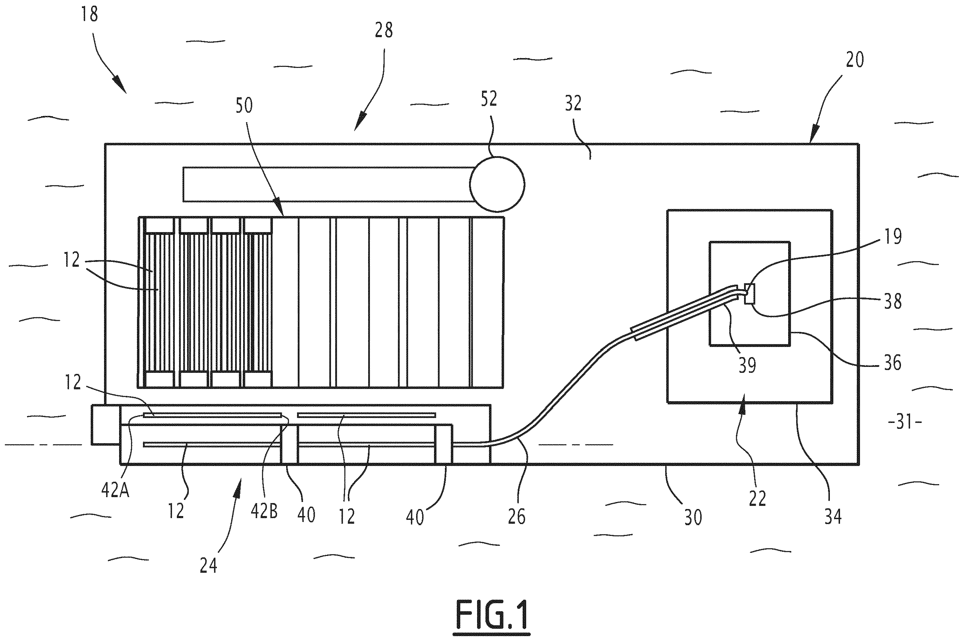

In the example of figures 1 to 4, each line section 12 is preferably a flexible pipeline, and has a longitudinal axis D-D' and delimits a fluid transport inner passage 14, which previously conveyed a fluid, in particular a petroleum fluid.

The inner passage 14 diameter advantageously ranges from 50 mm to 600 mm.

The line section 12 comprises at least a tubular layer 16 tightly delimiting the inner passage 14, and in some instances, a plurality of concentric layers positioned around the tubular layer 16.

In the example of a flexible pipe, the tubular layer 16 is a tubular metallic layer formed of a steel interlocked profile. The tubular metallic layer is for instance a carcass layer or a pressure vault layer.

In the particular case of a flexible unbonded pipe, considering the case wherein the tubular layer 16 is metallic layer like an internal carcass, the concentric layers further includes at least one layer of tensile armors positioned externally with respect to the tubular metallic layer, a tubular polymeric pressure sheath positioned outside the tubular metallic layer, a pressure vault inserted between the tubular polymeric sheath and the layer(s) of tensile armors, and/or an external sheath, intended for protecting the inner layers.

In the example of rigid pipe, the tubular layer 16 is a metal tube. In the particular example of pipe-in-pipe, the concentric layers may include at least a thermal insulation layer and an outer tubular metal pipe (or carrier pipe).

In all cases, the tubular layer 16 and when present, the concentric layers around the tubular layer 16 are plastically deformable when subjected to radial pinching forces, especially during the cutting of line sections 12 from a recovered line 19.

In the example of figure 1, the line sections 12 are submarine line sections obtained from an offshore decommissioning installation 18 configured to recover the submarine line 19.

The line sections 12 are transported from their offshore recovery site to the onshore decommissioning facility 10 where they are processed to possibly form deconstructed sections to be cleaned and/or recycled.

In the example of figure 1, the offshore decommissioning installation 18 comprises a recovery vessel 20, a line recovery system 22 and a cutting stage 24, to divide an upper region 26 (i.e. the first recovered end region) of the submarine line 19 recovered with the line recovery system 22 into several line sections 12. The line recovery system 22 and the cutting stage 24 are here carried by the recovery vessel 20.

The recovery vessel 20 further comprises, downstream of the cutting stage 24, a handling and storage stage 28 to temporarily store the line sections 12 cut in the cutting stage 24.

In this example, the recovery vessel 20 is a ship floating on the surface of a body of water 31. In a variant, the recovery vessel 20 is a platform, in particular a floating platform.

The recovery vessel 20 has a hull 30, floating on the surface of the body of water 31 and at least a deck 32 onto which the line recovery system 22, the cutting stage 24, and the storage stage 28 are positioned.

In the example of figure 1, the hull 30 has a moon pool 36 extending vertically through the deck 32 and through the hull 30 to provide a central vertical access in the body of water 31.

Alternatively, recovery operations can take place over the side or at the back of the vessel 20.

The line recovery system 22 is configured to vertically or horizontally lift the line above the surface of the body of water 31 to bring the upper region 26 of the submarine line 19 above the deck 32 to the cutting stage 24.

Alternatively, the submarine line 19 may be lifted via a tiltable or tilted line recovery system 22 (i.e. not completely vertical and not completely horizontal) above the surface of the body of water 31. The said system being inclined over the side, at the middle or at the back of the vessel 20. Typically, said tiltable systems are actually horizontal lay systems which are slightly inclined of a few degrees, for example between 10° and 45°, in relation to the deck 32 level of the recovery vessel 20.

In the example of figure 1, which concerns in particular flexible lines, the line recovery system 22 is a Vertical Lay System (VLS) configured to continuously recover a vertical section of the submarine line 19 and to redirect it above the hull 30. The vertical lay system 22 is configured to recover the submarine line 19, notably in a J-shape configuration.

In a variant (not shown), the line recovery system 22 comprises another type of lifting system configured to carry out a recovery in a S-lay or J-lay configuration.

In reference to figure 1, the vertical lay system 22 comprises a tower 34 mounted on the deck 32, and tensioners 38 carried by the tower 34 to continuously lift the submarine line 19. The line recovery system 22 further advantageously comprises a redirecting mechanism 39 to bend the submarine line 19 at the top of the tower 34 and redirect it towards the deck 32.

The tower 34 is here mounted above the moon pool 36. The moon pool 36 is typically arranged through the hull 30 of the recovery vessel 20, at the middle/center. When the recovery vessel 20 does not comprise a moon pool 36, the tower 34 is advantageously mounted near a side of the hull 30 to lift the submarine line 19 from the side.

As shown in figure 1, the cutting stage 24 here comprises at least a cutting system 40 positioned transversely with regards to the submarine line 19 being divided.

In the example of figure 1, each cutting system 40 comprises a line shear cutter, configured to transversely cut the submarine line 19 substantially perpendicularly to its axis.

Advantageously, each cutting system 40 comprises a pair of jaws, configured to extend transversely with regard to an axis of the upper region 26 of the submarine line 19. At least one jaw is mobile relative to the other between an open position in which the uncut upper region 26 of the submarine line 19 can be inserted between the jaws and a closed cutting position, in which the jaws shear and cut the upper region 26 to create at least a line section 12. The pair of jaws can be assimilated to a shear cutter.

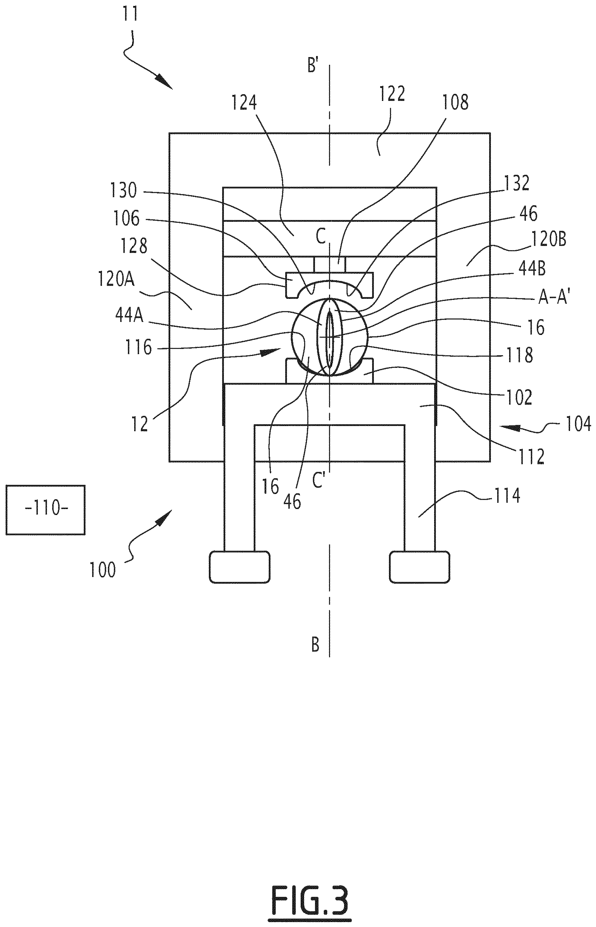

After being cut in the cutting system 40, at least part of the line sections 12 comprise at least one pinched end 42A, 42B, and in particular two pinched ends 42A, 42B in the example depicted in figures 2 and 3.

As shown in figure 3, the pinched end 42A comprise at least two segments 44A, 44B of the end edge 46 which are substantially parallel and adjacent, in particular in contact one with another, partially or fully closing the access to the inner passage 14. The two segments 44A, 44B extend substantially parallel to a pinch axis C-C', in a plane perpendicular to the longitudinal axis A-A'.

In reference to figure 1, the handling and storage stage 28 comprises a storage area 50 of the deck 32, and at least a crane 52, to carry the line sections 12 from the cutting stage 24 to the storage area 50.

As shown in figure 2, in addition to the processing unit 11 according to the invention, the first onshore decommissioning facility 10 comprises a handling unit 80 to carry the line end sections 12 received from the offshore decommissioning installation 18 to the processing unit 11. It may further comprise a cleaning unit 82, to clean the inner passage 14 of each line section 12 after its ends 42A, 42B have been reopened in the processing unit 11.

The cleaning unit 82 further comprises additional equipment to control/inspect the inner passage 14 of the line sections 12 and verify it has been well cleaned.

The first onshore decommissioning facility 10 may also comprise a deconstructing unit 84, to deconstruct the line sections 12 after end(s) reopening and possibly cleaning, and allow the recycling of the metal and polymer materials obtained from the line section constituent layers 12.

As shown in figures 2 to 4, the processing unit 11 comprises a plurality of supports 90 defining a longitudinal supporting surface 91, to hold the line section 12 along a longitudinal processing axis A-A'. It advantageously comprises at least a rotation mechanism 92, to rotate each line section 12 supported on the supporting surface 91 about the longitudinal axis A-A'.

The processing unit 11 further comprises, at each end of the supporting surface 91, a radial force application equipment to be engaged with the pinched ends 42A, 42B.

The radial force application equipment is configured to apply radial forces on or in the pinched ends 42A, 42B supported along the longitudinal axis A-A', the radial forces applying radially with regards to the longitudinal axis A-A'.

In the example of figures 2 to 4, the radial force application equipment is a press 94A, 94B (or a hydraulic rescue tool) configured to apply radial forces towards the axis A-A' to externally press the pinched ends 42A, 42B of the line section 12 and permanently reopen an access to the inner passage 14 of the line section 12.

In the example of figure 2, the processing unit 11 comprises a plurality of spaced apart supports 90 aligned along the longitudinal supporting axis A-A'. Each of the supports 90 defines at least part of the supporting surface 91. The supporting surface 91 is preferably horizontal.

The rotation mechanism 92 is configured to rotate the line section 12 about its longitudinal axis A-A' when it is received on the supporting surface 91. It is configured to define a proper orientation of the segments 44A, 44B of the end edge 46 of the pinched ends 42A, 42B, such that the pressing axis B-B' of the press 94A, 94B and the pinch axis C-C' define an angle comprised between 0° and 20°, preferably between 0° and 10°, in projection in a plane perpendicular to the longitudinal axis A-A'.

The rotation mechanism 92 for example comprises a plurality of rollers 98, 96, including powered rollers 98, configured to be activated by an operator or by a controller to control the orientation of the pinched end 42A, 42B about the longitudinal axis A-A', and passive rollers 96, to support and guide the rotation of the line section 12 about the longitudinal axis A-A'.

In this example, the rollers 98, 96 are held by respective supports 90. The rollers 98, 96 are positioned in pairs, adjacent to one another, with their rotating axis being parallel to the longitudinal axis A-A'.

In the example of figure 2, the powered rollers 98 are located on the end supports 90 closer to the presses 94A, 94B, and the passive rollers 96 are located on intermediate supports 90 between the end supports 90.

As mentioned above, each press 94A, 94B is located at a longitudinal end of the supporting surface 91, along the longitudinal axis A-A'.

Each press 94A, 94B comprises a stand 100 and a first press member 102, held by the stand 100. Each press 94A, 94B further comprises a movable frame 104, movable in translation along the longitudinal axis A-A' along the stand 100, and a second press member 106, held by the movable frame 104, the second press member 106 being mobile relatively to the first press member 102 along a pressing axis B-B' perpendicular to the longitudinal axis A-A'.

The movable frame 104 is also advantageously movable in translation transversely to the longitudinal axis A-A'.

Each press 94A, 94B further comprises an actuator 108 of the second press member 106 and a controller 110 of the actuator 108, configured to be operated by an operator.

As shown in figures 2 and 3, the stand 100 comprises a tray 112, and holding legs 114 to maintain the tray 112 flush with the supporting surface 91, to longitudinally extend the supporting surface 91.

The first press member 102 is advantageously fixed on the tray 112. It defines a longitudinal guiding recess 116, extending along the longitudinal axis A-A'.

The guiding recess 116 opens longitudinally and upwardly. It preferably has a concave shape (for example a U or V shape in cross-section), to accommodate a lower region of the outer surface of the line section 12.

The length of the longitudinal guiding recess 116 is advantageously equal or greater to a stroke of the movable frame 104 relative to the stand 100.

The longitudinal guiding recess 116 defines a first fixed pressing surface 118, which is configured to receive a pinched end 42A, 42B of the line section 12.

The movable frame 104 comprises two lateral beams 120A, 120B which extend laterally outside of the stand 100 and which protrude above the tray 112.

The movable frame 104 further comprises at least an upper cross member 122 connecting the two beams 120A, 120B.

In the example of figure 3, the movable frame 104 also comprises an intermediate adjustable cross member 124, whose height along the lateral beams 120A, 102B can be adjusted.

The intermediate cross member 124 holds the actuator 108 and the second press member 106.

The actuator 108 comprises a deployable jack, holding the second press member 106, which is configured to move the second press member 106 along the pressing axis B-B' towards the first press member 102.

The deployable jack is configured to exert a pressing force along the pressing axis B-B', whose intensity is generally comprised between 5 Tonnes and 200 Tonnes.

Alternatively, the deployable jack can be configured to exert a pressing force perpendicular to the pressing axis B-B' should the pinch end axis required it
Alternatively, the upper cross member 122 holds the actuator 108 to then be able to move the intermediate cross member 124 and then the second press member 106 along the pressing axis B-B' towards the first press member 102.

The second press member 106 comprises a movable mandrel 128, defining a lower longitudinal notch 130, opening towards the recess 116 of the first press member 102.

The lower longitudinal notch 130 opens longitudinally along the axis A-A', and downwardly towards the second press member 106.

In cross-section in a plane perpendicular to the longitudinal axis A-A', it has a U or V shape. The lower longitudinal notch 130 thus defines a second pressing surface 132, configured to contact an upper region of the outer surface of the line section 12.

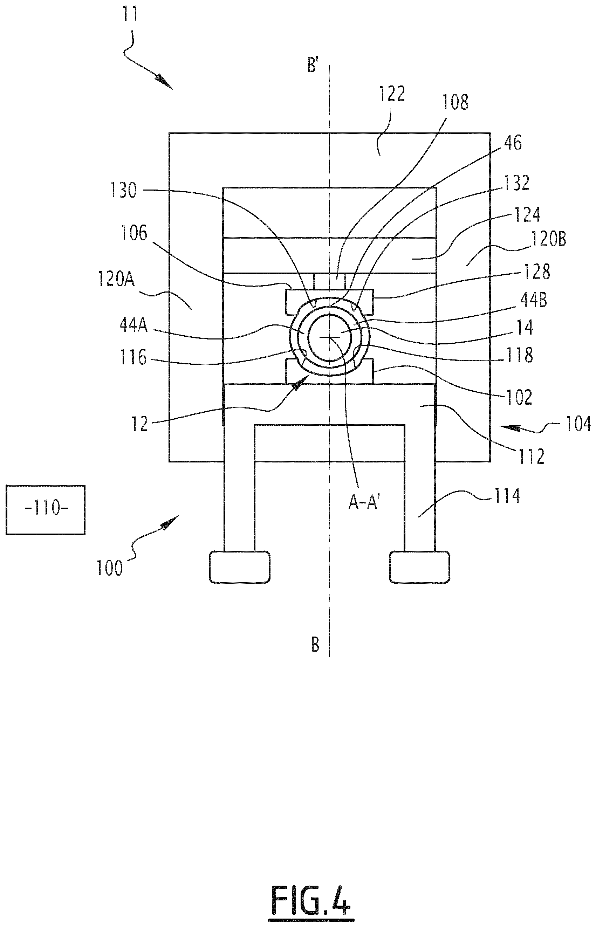

The controller 110 is configured to actuate the actuator 108 (or alternatively the intermediate cross member 124), to move the second press member 106 closer to the first press member 102 in translation along the pressing axis B-B', such that the first pressing surface 118 moves closer to the second pressing surface 132, from a release position shown in figure 3, to a pressing position shown in figure 4.

In reference to figure 2, the handling unit 80 may comprise a plurality of transverse conveyors 140 extending transversely to the longitudinal axis A-A', for example between 2 and 5 transverse conveyors 140. Each transverse conveyor 140 comprises a continuous belt 142 forming a loop, and at least two pulleys 144C, 144D, onto which the belt 142 is wound.

The handling unit 80 further comprises a power unit (not shown), configured to drive the pulleys 144C, 144D in rotation around their axis to move the belt 142 in either directions perpendicularly to the longitudinal axis A-A'.

As shown in figure 2, the belt 142 can be for example of the cleated belt type equipped with longitudinal cleats acting as stoppers. Each pair of adjacent cleats define between them a slot dimensioned to receive a region of a line section 12, and to maintain it substantially parallel to the longitudinal axis A-A'.

The successive slots of successive parallel transverse conveyors 140 are aligned along an axis parallel to the longitudinal axis A-A' to form lines of slots parallel to the longitudinal axis A-A'.

When received in a line of slots parallel to the longitudinal axis A-A', the handling unit 80 is configured to transversely move a line section 12 in either direction relative to the longitudinal axis A-A'.

This allows loading and unloading successive line sections 12.

Alternatively, the processing unit 11 may comprise a single fixed support 90 or several fixed supports 90.

Advantageously, the handling unit 80 is inclined compared to the ends supports 90 to allow a plurality of stored line sections 12 to slide towards said end supports 90 by gravity.

Preferably, the processing unit 11 further comprises at least two vertical stoppers (not shown), for example fixed on a support 90 to stop stored line sections 12 and prevent them from being transferred, the stored line sections being held by the ends supports 90. Then again, this allows loading and unloading of successive line sections 12.

The cleaning unit 82 may comprise at least a cleaning fluid dispensing hose configured to be introduced within the line section 12 through a reopened end 42A, 42B of the line section 12, to dispense a cleaning fluid in the inner passage 14.

The cleaning fluid is for example pressurized water, in particular produced by a highpressure water jet generator.

Alternatively, the cleaning unit 82 may further comprise means for controlling/inspecting the inner passage 14 of the line section 12 and verifying the level of cleanliness.

The deconstructing unit 84 may advantageously comprise a splitting stage to produce deconstructed sections, and a separation stage, to separate the layers of the deconstructed sections into metal layers and polymeric layers to be separately recycled in a recycling unit (not shown).

An example of a line decommissioning method according to the invention can be described as follows.

Initially, at step 144, a submarine line 19 is progressively recovered from the body of water 31 in the line recovery system 22.

An upper region 26 of the submarine line 19 is received in the tensioners 38 and is then redirected to the cutting stage 24.

At step 145, the upper region 26 of the submarine line 19 is fed between the jaws of the or each cutting system 40 in their open position and is immobilized.

At step 146, the cutting systems 40 are activated. The jaws of the cutting system 74 are moved to their closed cutting position.

The upper region 26 received in the cutting stage 24 is divided in at least two lines sections 12.

While being cut, at least one end 42A, 42B, often both ends 42A, 42B of the line sections 12 are pinched. As mentioned above, two segments 44A, 44B of the end edge 46 are substantially parallel and in contact with another, partially or fully closing the access to the inner passage 14.

The two segments 44A, 44B extend substantially parallel to a pinch axis C-C', in a plane perpendicular to the longitudinal axis D-D' of the line section 12.

At step 148, the line sections 12 are moved and stored in handling and storage stage 28, before being unloaded and transported onshore to the onshore decommissioning facility 10.

At step 150, in the onshore decommissioning facility 10, each line section 12 is then positioned on the handling unit 80 for example with a crane or a forklift.

In the example of figure 2, the line section 12 is laid at one end of the transverse conveyors 140 and is lifted to the supporting surface 91 by the transverse conveyors 140. The pinched ends 42A, 42B rest on a respective first press member 102 of a respective press 94A, 94B. The longitudinal position of each movable frame 104 is adjusted to place the second press member 106 facing a respective pinched end 42A, 42B.

Then, the pinched end 42A, 42B are processed successively. For each pinched end 42A, 42B, at step 152, the line section 12 is rotated about the longitudinal axis A-A' by the rotation mechanism 92 to place the axis C-C' of the two segments 44A, 44B of the end edge 46 parallel to the pressing axis B-B', as shown in figure 3.

The longitudinal ends of the two parallel segments 44A, 44B respectively face the first pressing surface 118 and the second pressing surface 132.

At step 154, the controller 110 actuates the actuator 108 to move the second press member 106 towards the first press member 102 along the pressing axis B-B'.

The two ends of the two segments 44A, 44B apply respectively on the first pressing surface 118 and on the second pressing surface 132, which move closer from one another along the pressing axis B-B'.

Thus, the end edge 46 of the line section 12 undergoes a plastic deformation to at least partially open an access to the inner passage 14, as shown in figure 4.

The deformation is permanent and allows a permanent access to the inner passage 14.

The shape of the notch 130 defining the second pressing surface 132 having a U shape or a V shape helps maintaining the orientation of the end of the submarine pipe 12 during the pressing. This allows a significant curving of the segments 44A, 44B apart from one another to reopen the access to the inner passage 14.

At optional step 156, the line section 12 is conveyed to a cleaning unit 82 where a cleaning system is introduced into the inner passage 14 to clean the inner passage through the reopened access.

The submarine line section 12 may then possibly be deconstructed in the deconstruction unit 84.

When the line section end is reopened, it is removed from the processing unit 11, for example by a crane or a forklift, or another handling equipment.

In the above example, the pressing axis B-B' is vertical. In a variant, the pressing axis B-B' has another orientation, for example horizontal, the first pressing surface 118 and the second pressing surface 132 moving along the pressing axis B-B'.

In the above-described method, steps 150 to 156 are generally carried out by at least one operator, preferably by at least two operators, which control the conveyors 104, the rotation mechanism 92, and/or the controller 110 of each press 94A, 94B.

In particular, a first operator may control one press 94A and a second operator may control the other press 94B sequentially, one after the other or simultaneously.

In a variant, at least one of steps 150 to 156 is carried out automatically by an automatic controller.

Thanks to the line end processing method according to the invention, each end 42A, 42B of a line section 12 can be processed to reopen an access to the inner passage 14, even if the end 42A, 42B was pinched during the cutting of the line section 12.

The processing method is simple to carry out, at a pace of generally less than 30 seconds, in a safe manner. It is thus not necessary to cut or trim the ends of the line section 12 to access the inner passage 14, which improves the productivity and reduces the produced waste. The processing method can easily be applied to many types of line sections 12, such as flexible pipe sections or rigid pipe sections.

In a variant (not shown), the radial force application equipment is configured to be at least partially inserted in the inner passage 14 at a pinched end 42A, 42B, when the pinched end 42A, 42B is sufficiently open. The radial force application equipment is configured to apply radial forces away from the longitudinal axis A-A', internally in the inner passage 14, to decompress the pinched end 42A, 42B.

Preferably, the radial force application equipment comprises a first surface and a second surface configured to be inserted in the inner passage 14 at the pinched end. It comprises an actuator 108 configured to move the first surface and the second surface away from one another to apply radial forces in the pinched end to decompress the pinched end.

For example, the radial force application equipment comprises mechanical or/and hydraulic pliers having jaws configured to be inserted in the inner passage 14 at the pinched end 42A, 42B. Each jaw delimits one of the first surface and of the second surface which move away from one another when the radial force application equipment is activated. In another example, the radial force application equipment comprises a tool configured to be inserted in the inner passage 14 at the pinched end 42A, 42B.

The tool may comprise two diametrically opposed surfaces which move away from one another when the tool is actuated. For example, the tool is equipped with an inflatable volume which when it is actuated may apply a circumferential radial force over its outer surface to reopen the pinched end 42A, 42B. In that case, the opposed surfaces which move away from one another are regions of the outer surface of the inflatable volume located on opposed angular sectors with regard to the longitudinal axis of the inflatable volume.

When carrying out the method according to the invention, the first surface and the second surface of the radial force application equipment are first inserted in the inner passage 14 at the pinched end 42A, 42B. The radial force application equipment is activated. The first surface and the second surface move away from one another along a decompressing axis and apply radial forces in the pinched end to decompress the pinched end.

Generally, when the pinched end 42A, 42B comprises two adjacent end segments 44A, 44B extending substantially along a pinch axis C-C' in projection in a plane perpendicular to the longitudinal axis A-A', the decompressing axis extends substantially perpendicularly to the pinch axis C-C' in projection in the plane perpendicular to the longitudinal axis A-A'. The decompressing axis and the pinch axis C-C' are preferably oriented to define an angle comprised between 70° and 90°, preferably between 80° and 90°, in projection in the plane perpendicular to the longitudinal axis A-A'.

## Claims

1. A processing method to process at least an end (42A, 42B) of a line or line section (12), in particular a submarine line or line section or an onshore line or line section, comprising:
- placing the line or line section (12) along a longitudinal axis (A-A') on a supporting surface (91), the line or line section (12) having at least a tubular layer (16) defining an inner passage (14) at least partially closed by a pinched end at an end of the tubular layer (16);
- engaging the pinched end with a radial force application equipment configured to apply radial forces on or in the pinched end;
- activating the radial force application equipment to apply radial forces on or in the pinched end, the radial forces permanently deforming the pinched end to at least partially open the inner passage (14).

2. The processing method according to claim 1, wherein engaging the pinched end with a radial force application equipment comprises placing the pinched end between a first surface (118) and a second surface (132) of the radial force application equipment, activating the radial force application equipment comprising moving the first surface (118) and the second surface (132) closer to one another along a pressing axis (B-B') to apply radial forces on the pinched end to press the pinched end, or
wherein engaging the pinched end with a radial force application equipment comprises inserting a first surface and a second surface of the radial force application equipment in the inner passage (14) at the pinched end, activating the radial force application equipment comprising moving the first surface and the second surface away from one another to apply radial forces in the pinched end to decompress the pinched end.

3. The processing method according to claim 2, wherein the pinched end comprises two adjacent end segments (44A, 44B) extending substantially along a pinch axis (C-C') in projection in a plane perpendicular to the longitudinal axis (A-A'), and wherein, when moving the first surface (118) and the second surface (132) closer to one another, the pressing axis (B-B') and the pinch axis (C-C') define an angle comprised between 0° and 20°, preferably between 0° and 10°, in projection in the plane perpendicular to the longitudinal axis (A-A').

4. The processing method according to any one of the preceding claims, comprising, after placing the line or line section (12) on the supporting surface (91) and before activating the radial force application equipment, rotating the pinched end about the longitudinal axis (A-A').

5. The processing method according to any one of the preceding claims, wherein the pinched end is delimited by an end edge (46) of the tubular layer (16).

6. The processing method according to any one of the preceding claims, wherein the line or line section (12) comprises an additional pinched end at another end of the tubular layer (16), the method comprising engaging the additional pinched end with an additional radial force application equipment, and activating the additional radial force application equipment to apply radial forces on or in the additional pinched end, the radial forces permanently deforming the additional pinched end to at least partially open the inner passage (14).

7. The processing method according to claim 6, wherein activating the additional radial force application equipment to apply radial forces on or in the additional pinched end, is carried out simultaneously or subsequently to activating the radial force application equipment to apply radial forces on or in the pinched end.

8. The processing method according to any one of the preceding claims, wherein placing the line or line section (12) on the supporting surface (91) comprises transversely moving the line or line section (12) towards the supporting surface (91).

9. The processing method according to claim 8, wherein transversely moving the line or line section (12) towards the supporting surface (91) comprises laying the line or line section (12) at a first end of at least a conveyor (140), the or each conveyor (140) moving the line or line section (12) to the supporting surface (91), or
wherein transversely moving the line or line section (12) towards the supporting surface (91) comprises laying the line or line section (12) on an inclined surface relative to the supporting surface (91), the line or line section (12) sliding towards the supporting surface (91) by gravity.

10. The processing method according to any one of the preceding claims, wherein the line or line section (12) comprises a least one tubular layer (16), in particular a plurality of concentric tubular layers, defining the pinched end, activating the radial force application equipment comprising deforming the at least one tubular layer (16) to open the inner passage (14).

11. The processing method according to claim 10, wherein the line or line section (12) is a flexible pipe, in particular an unbonded or bonded flexible pipe or is a rigid pipe, in particular a single metal rigid pipe or a metal rigid pipe-in-pipe.

12. A line decommissioning method comprising:
- processing at least an end (42A, 42B) of a line or line end section (12) using the processing method according to any one of the preceding claims;
- inserting at least a tool through the inner passage to carry out an operation in the inner passage, the tool being advantageously a cleaning hose to clean the inner passage (14) or/and an inspection tool to inspect the inner passage (14).

13. The line decommissioning method according to claim 12, comprising, before processing at least an end (42A, 42B) of the line or line end section (12), recovering a submarine line (19) offshore, and dividing at least an upper region (26) of the recovered submarine line (19) into line sections (12), the dividing comprising cutting an end of the line section (12) by pinching at least an end of a tubular layer (16) of the line section (12).

14. An assembly comprising a processing unit (11) to process at least an end (42A, 42B) of a line section (12), and a line section (12) having at least a tubular layer (16) defining an inner passage (14) at least partially closed by a pinched end at an end of the tubular layer (16)
the processing unit (11) comprising:
- a supporting surface (91) to place the line section (12) along a longitudinal axis (A-A');
- a radial force application equipment configured to apply radial forces on or in the pinched end supported along the longitudinal axis (A-A');
the radial force application equipment being configured to apply radial forces on or in the pinched end, the radial forces being configured to permanently deform the pinched end to at least partially open the inner passage (14).

15. The assembly according to claim 14, wherein the radial force application equipment has a first surface (118) and a second surface (132) configured to receive the pinched end between them, and an actuator (108) being configured to move the first surface (118) and the second surface (132) closer to one another along a pressing axis (B-B') to apply radial forces on the pinched end to press the pinched end, or
wherein the radial force application equipment comprises a first surface and a second surface configured to be inserted in the inner passage (14) at the pinched end and an actuator being configured to move the first surface and the second surface away from one another to apply radial forces in the pinched end to decompress the pinched end.

16. The assembly according to claim 15, comprising a rotation mechanism (92), placed on the supporting surface (91), configured to rotate the line section (12), to control an angle of a pinch axis (C-C') defined by two adjacent end segments (44A, 44B) of the pinched end in projection in a plane perpendicular to the longitudinal axis (A-A'), relatively to the pressing axis (B-B') of the press (94A) in projection in the plane perpendicular to the longitudinal axis (A-A').

17. The processing unit according to any one of claims 15 or 16, wherein the first surface (118) is fixed with regards to the supporting surface (91) or is delimited on the supporting surface (91), the radial force application equipment having a mandrel (128) having a longitudinal notch (130) delimiting the second surface (132), the notch (130) preferably having a U shape or a V shape.
